# EUROPEAN PATENT SPECIFICATION

(11) **EP 3 936 219 B1**
(45) Date of publication and mention of the grant of the patent: **03.04.2024**
(21) Application number: 20788092.3
(22) Date of filing: 26.02.2020
(51) Int. Cl.: B01D 53/14, B01D 53/52, B01D 53/62, C01B 32/50, C01B 17/16

(54) **ABSORBING LIQUID FOR CO2, H2S, OR BOTH, AND DEVICE AND METHOD FOR REMOVING CO2, H2S, OR BOTH**
ABSORPTIONSFLÜSSIGKEIT FÜR CO2, H2S ODER BEIDES SOWIE VORRICHTUNG UND VERFAHREN ZUR ENTFERNUNG VON CO2, H2S ODER BEIDEM
LIQUIDE ABSORBANT POUR CO2, H2S, OU LES DEUX, ET DISPOSITIF ET PROCÉDÉ D'ÉLIMINATION DU CO2, DU H2S OU DES DEUX

(30) Priority: 12.04.2019 JP 2019076616
(43) Date of publication of application: 12.01.2022
(73) Proprietor: Mitsubishi Heavy Industries, Ltd., Chiyoda-ku Tokyo 100-8332 (JP); The Kansai Electric Power Co., Inc., Kita-ku Osaka-shi Osaka 530-8270 (JP)
(72) Inventor: TANAKA, Hiroshi, Tokyo 100-8332 (JP); KAMIJO, Takashi, Yokohama-shi, Kanagawa 220-8401 (JP); KISHIMOTO, Shinya, Yokohama-shi, Kanagawa 220-8401 (JP); HIRATA, Takuya, Tokyo 100-8332 (JP); TSUJIUCHI, Tatsuya, Tokyo 100-8332 (JP)
(74) Representative: Studio Torta S.p.A.
(86) International application number: PCT/JP2020/007613
(87) International publication number: WO 2020/208959

(56) References cited:
- EP-A1- 2 769 759
- WO-A1-2017/057179
- CN-A- 105 664 672
- JP-A- 2013 086 079
- JP-A- 2017 064 645
- JP-A- 2018 122 242
- US-A1- 2017 080 378
- US-A1- 2018 280 867

## Description

### Field

The present invention relates to an absorbent for carbon dioxide (CO₂) or hydrogen sulfide (H₂S), or both of CO₂ and H₂S, and a device and a method for removing CO₂ or H₂S, or both of CO₂ and H₂S, and particularly relates to an absorbent for CO₂ in a flue gas, and a CO₂ recovery unit and method.

### Background

As a method for recovering and removing an acid gas contained in a gas (gas to be treated) including a natural gas, various industrial gases produced at chemical plants such as a synthetic gas, a flue gas, or the like, especially CO₂, various methods have been conventionally proposed. Examples of such methods include a method in which CO₂ and H₂S in a flue gas are brought into contact with an alkanolamine aqueous solution as an absorbent, removed, and recovered.

For example, such an absorbent is an absorbent of monoethanolamine (MEA) that is a primary monoamine of alkanolamine. By oxygen and the like in the flue gas, degradation of the absorbent by itself advances. As a countermeasure for this, an absorbent obtained by blending a secondary cyclic diamine or a predetermined primary monoamine having high steric hindrance with a novel secondary monoamine has been known (for example, Patent Literature 1). An absorbent obtained by adding a tertiary monoamine to a mixture of a secondary monoamine and a secondary cyclic diamine has been also known (for example, Patent Literature 2 and Patent Literature 3). Furthermore, an absorbent obtained by mixing predetermined primary, secondary, and tertiary monoamines having high steric hindrance has been known (for example, Patent Literature 4). Furthermore, an absorbent obtained by mixing a secondary monoamine, a secondary cyclic diamine, and a tertiary monoamine has been known (for example, Patent Literature 5).

### Citation List

### Patent Literature

Patent Literature 1: Japanese Patent No. 5215595
Patent Literature 2: Japanese Patent No. 4634384
Patent Literature 3: Japanese Patent Application Laid-open No. 2013-086079
Patent Literature 4: Japanese Patent Application Laid-open No. 2008-168227
Patent Literature 5: Japanese Patent Application Laid-open No. 2017-64645

### Summary

### Technical Problem

However, in terms of components of the absorbents disclosed in Patent Literature 1 to Patent Literature 5, and mixing ratios thereof, a problem arises in which a large amount of heat is required for a reboiler during recirculation of the absorbents.

In view of the circumstances, an object of the present invention is to provide an absorbent for CO₂ or H₂S, or both of CO₂ and H₂S that can reduce a reboiler duty during recirculation of the absorbent, and device and method for removing CO₂ or H₂S, or both of CO₂ and H₂S. Solution to Problem

According to a first aspect of the present invention, an absorbent is for absorbing CO₂ or H₂S, or both of CO₂ and H₂S in a gas. The absorbent includes, as components, (a) a secondary linear monoamine; (b) a tertiary linear monoamine; and (c) a secondary cyclic diamine. A concentration of the secondary linear monoamine (a) is more than 30% by weight and less than 45% by weight. A concentration of the tertiary linear monoamine (b) is more than 15% by weight and less than 30% by weight.

According to a second aspect of the present invention, a device is for removing CO₂ or H₂S, or both of CO₂ and H₂S. The device includes an absorber that brings a gas containing CO₂ or H₂S, or both of CO₂ and H₂S into contact with an absorbent to remove CO₂ or H₂S, or both of CO₂ and H₂S; and an absorbent regenerator that regenerates a solution in which CO₂ or H₂S, or both of CO₂ and H₂S are adsorbed. The solution regenerated by removing CO₂ or H₂S, or both of CO₂ and H₂S in the absorbent regenerator is reused in the absorber. The absorbent used in the device uses the absorbent according to the first aspect.

According to a third aspect of the present invention, a method is for removing CO₂ or H₂S, or both of CO₂ and H₂S. The method includes: bringing a gas containing CO₂ or H₂S, or both of CO₂ and H₂S into contact with an absorbent to remove CO₂ or H₂S, or both of CO₂ and H₂S in an absorber; regenerating a solution in which CO₂ or H₂S, or both of CO₂ and H₂S are absorbed in an absorbent regenerator; and reusing the solution regenerated by removing CO₂ or H₂S, or both of CO₂ and H₂S in the absorbent regenerator in the absorber. The absorbent used to remove CO₂ or H₂S, or both of CO₂ and H₂S is the absorbent according to the first aspect.

### Advantageous Effects of Invention

The present invention can provide an absorbent for absorbing CO₂ or H₂S, or both of CO₂ and H₂S in a gas, the absorbent containing, as components, (a) a secondary linear monoamine, (b) a tertiary linear monoamine, and (c) a secondary cyclic diamine, wherein when the concentration of the secondary linear monoamine (a) is more than 30% by weight and less than 45% by weight and the concentration of the tertiary linear monoamine (b) is more than 15% by weight and less than 30% by weight, a reboiler duty during recirculation of the absorbent can be reduced, and device and method for removing CO₂ or H₂S, or both of CO₂ and H₂S.

### Brief Description of Drawings

FIG. 1 is a schematic view illustrating a configuration of a CO₂ recovery unit according to Example 1.
FIG. 2 is a graph illustrating reboiler duty reduction percentages of three-component-based absorbents of Test Examples 1-1 to 1-5.
FIG. 3 is a graph illustrating reboiler duty reduction percentages of three-component-based absorbents of Test Examples 2-1 to 2-5.
FIG. 4 is a graph illustrating a relation between the amine component concentration (% by weight) of an absorption component and a reboiler duty ratio in Test Example 1-6.
FIG. 5 is a graph illustrating a relation between the amine component concentration (% by weight) of an absorption component and a reboiler duty ratio in Test Example 3.
FIG. 6 is a graph illustrating a relation between a weight ratio "(b) tertiary linear monoamine/((a) secondary linear monoamine + (c) secondary cyclic diamine)" and a reboiler duty ratio in Test Example 6.
FIG. 7 is a graph illustrating a relation between a weight ratio "(b) tertiary linear monoamine/(a) secondary linear monoamine" and a reboiler duty ratio in Test Example 7.

### Description of Embodiments

Hereinafter, preferred examples of the present invention will be described in detail with reference to the accompanying drawings. The present invention is not limited by the examples. When there are a plurality of examples, the present invention includes a combination of the examples.

### Examples

An absorbent according to an example of the present invention is an absorbent for absorbing CO₂ or H₂S, or both of CO₂ and H₂S in a gas. The absorbent contains, as components, (a) a secondary linear monoamine, (b) a tertiary linear monoamine, and (c) a secondary cyclic diamine. The concentration of the secondary linear monoamine (a) is more than 30% by weight and less than 45% by weight, and the concentration of the tertiary linear monoamine (b) is more than 15% by weight and less than 30% by weight.

Herein, it is preferable that the concentration in % by weight of the secondary cyclic diamine (c) relative to the absorbent be lower than the concentration of the secondary linear monoamine (a), and be lower than the concentration of the tertiary linear monoamine (b).

The total concentration of the secondary linear monoamine (a), the tertiary linear monoamine (b), and the secondary cyclic diamine (c) is preferably more than 46% by weight and 75% by weight or less.

The total concentration of the components (a) to (c) that suitably falls within a range of 50% by weight to 70% by weight, and further suitably falls within a range of 55% by weight to 65% by weight is preferable. This is because the reboiler duty can be reduced during recirculation of the absorbent even when the concentration is high.

The lower limit of the concentration of the secondary cyclic diamine (c) is 1% by weight or more, and preferably 3% by weight or more.

Thus, when the concentrations of the secondary linear monoamine (a), the tertiary linear monoamine (b), and the secondary cyclic diamine (c) fall within the aforementioned ranges, the CO₂ absorption capacity of the absorbent can be retained due to excellent CO₂ absorbability of the secondary linear monoamine (a) and the secondary cyclic diamine (c), and the CO₂ desorption capacity of the absorbent can be improved due to excellent CO₂ releasability of the secondary linear monoamine (a) and the tertiary linear monoamine (b). Therefore, even when the concentration of agent of the absorbent is high, the reboiler duty during regeneration of the absorbent in which CO₂ has been absorbed can be reduced.

The secondary linear monoamine (a) includes a compound selected from at least one of N-methylaminoethanol, N-ethylaminoethanol, N-propylaminoethanol, N-butylaminoethanol. The compounds may be combined.

The tertiary linear monoamine (b) includes a compound selected from at least one of N-methyldiethanolamine, N-ethyldiethanolamine, N-butyldiethanolamine, 4-dimethylamino-1-butanol, 2-dimethylaminoethanol, 2-diethylaminoethanol, 2-di-n-butylaminoethanol, N-ethyl-N-methylethanolamine, 3-dimethylamino-1-propanol, 2-dimethylamino-2-methyl-1-propanol. The compounds may be combined.

The secondary cyclic diamine (c) includes a compound such as piperazine (C₄H₁₀N₂), 2-methylpiperazine (C₅H₁₂N₂), and 2,5-dimethylpiperazine (C₆H₁₄N₂), or a mixture thereof.

The secondary linear monoamine (a) that is a component constituting an absorption component in the present invention has general characteristics in which by a reaction with CO₂ in a flue gas, a carbamate containing an amine as the absorption component in the molecule is produced, and CO₂ is fixed. Therefore, the secondary linear monoamine (a) has high absorption capacity.

However, under a high concentration condition, it is necessary to prevent deterioration in the absorption rate and absorption performance due to increased viscosity of the absorbent, and to prevent deterioration in regeneration performance.

Meanwhile, in the tertiary linear monoamine (b) that is another component of the present invention, CO₂ is mainly dissolved as a bicarbonate salt without producing a carbamate by a reaction with CO₂. Therefore, the absorption performance of the tertiary linear monoamine (b) is inferior to the absorption performance of the secondary linear monoamine (a). Even under a high concentration condition, an increase in viscosity of the absorbent can be comparatively moderated. The tertiary linear monoamine (b) has excellent regeneration performance.

Based on the aforementioned properties of both the components constituting the absorbent, a composition of components of the absorption component that suppresses an increase in viscosity of the absorbent, retains absorption performance even under a high concentration condition of the absorption component, and prevents a reduction in regeneration performance to reduce the reboiler duty has been intensively studied. In the present invention, it has been found that as a composition of the absorption component in which the concentration of the tertiary linear monoamine (b) is set within a relatively high and suitable range even under a composition condition where the concentration of the secondary linear monoamine (a) is high, the composition contains, as components, the secondary linear monoamine (a), the tertiary linear monoamine (b), and the secondary cyclic diamine (c), that the concentration of the secondary linear monoamine (a) is set within a range of more than 30% by weight and less than 45% by weight, and that the concentration of the tertiary linear monoamine (b) is set within a range of more than 15% by weight and less than 30% by weight.

Herein, for measurement of increased viscosity of the absorbent, the viscosity (A) when a regenerated CO₂ absorbent (lean solution), of the absorbent that is circulated and reused in a CO₂ absorber for removing CO₂ in a flue gas and an absorbent regenerator that releases absorbed CO₂, is supplied to the CO₂ absorber, and the viscosity (B) of an CO₂ absorbent (rich solution) in which CO₂ has been absorbed at a CO₂ recovery portion of the CO₂ absorber are measured. Under mixing of the present invention as presented in Test Examples described below, it is confirmed that an increase in viscosity of the absorbent is suppressed.

Furthermore, it is preferable that the mixing ratio of the components (components a, b, and c) be defined so that the weight ratio of the tertiary linear monoamine (b) to the total weight of the secondary linear monoamine (a) and the secondary cyclic diamine (c) is more than 0.3 and less than 0.85.

When it is thus defined, an absorbent containing, as components of the absorption component, the secondary linear monoamine (a) and the tertiary linear monoamine (b) at high concentrations and having excellent saving energy due to a suitable weight ratio "(b) tertiary linear monoamine/((a) secondary linear monoamine + (c) secondary cyclic diamine)" can be provided.

It is preferable that the mixing ratio of the components (components a and b) be defined so that the weight ratio of the tertiary linear monoamine (b) to the secondary linear monoamine (a) is more than 0.5 and less than 1.0.

When it is thus defined, an absorbent containing, as the component of the absorption component, the tertiary linear monoamine (b) at a high concentration and having excellent saving energy due to a suitable weight ratio "(b) tertiary linear monoamine/(a) secondary linear monoamine" can be provided.

In the present invention, for example, it is preferable that the absorption temperature of the absorber for a chemical absorption method during contact with a flue gas containing CO₂ or the like generally fall within a range of 30 to 80°C. To the absorbent used in the present invention, a corrosion inhibitor, a degradation inhibitor, or the like is added, if necessary.

It is preferable that the CO₂ partial pressure at an inlet of a CO₂ absorber during absorption in which CO₂ in a gas to be treated is adsorbed be low CO₂ partial pressure (for example, 0.003 to 0.1 MPa) in terms of application of the chemical absorption method.

In the present invention, when the pressure of the absorbent regenerator that releases CO₂ or the like from the absorbent in which CO₂ or the like has been absorbed is 130 to 200 kPa (absolute pressure), it is preferable that the regenerator bottom temperature of the absorbent regenerator that is the regeneration temperature of the regenerator be 110°C or higher. This is because it is necessary to increase the amount of absorbent circulated in a system during regeneration at lower than 110°C, and the regeneration is not preferred in terms of regeneration efficiency. Regeneration at 115°C or higher is more preferred.

Examples of a gas to be treated in the present invention include, but not limited to, a coal gasified gas, a synthesis gas, a coke-oven gas, a petroleum gas, a natural gas, a flue gas, and the like. Any gas may be used as long as it contains a gas containing an acid gas such as CO₂ or H₂S.

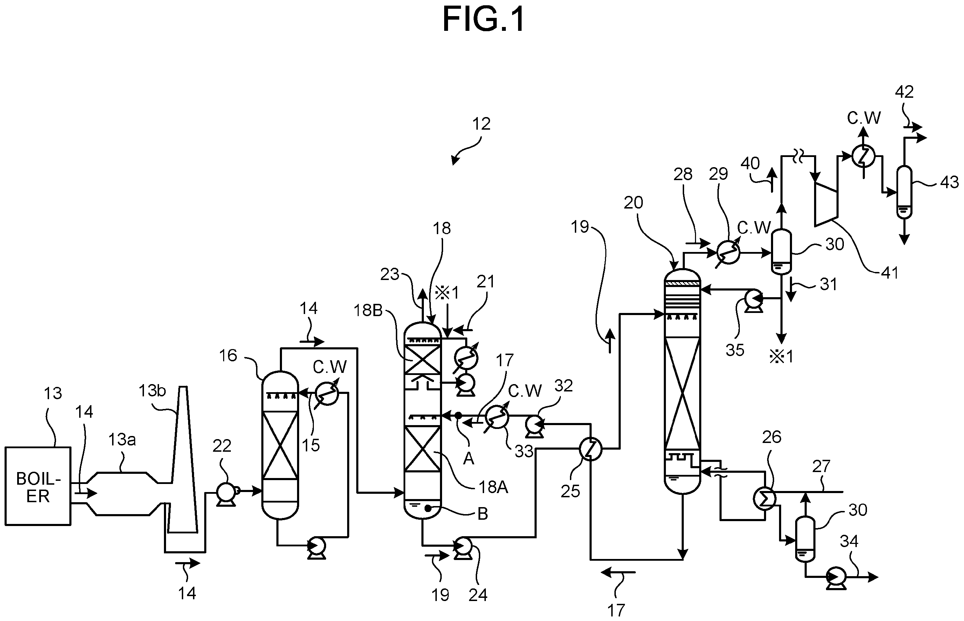

A process that can be employed in a method for removing CO₂ or H₂S, or both of CO₂ and H₂S in a gas of the present invention is not particularly limited, and an example of a removal device that removes CO₂ will be described with reference to FIG. 1.

FIG. 1 is a schematic diagram illustrating a configuration of a CO₂ recovery unit according to Example 1. As illustrated in FIG. 1, a CO₂ recovery unit 12 according to Example 1 has a flue gas cooling device 16 that cools a flue gas 14 containing CO₂ and O₂ discharged from an industrial combustion facility 13 such as a boiler or a gas turbine using cooling water 15, a CO₂ absorber 18 having a CO₂ recovery portion 18A that brings the cooled flue gas 14 containing CO₂ into contact with a CO₂ absorbent (hereinafter sometimes referred to as "absorbent") 17 that absorbs CO₂ to remove CO₂ from the flue gas 14, and an absorbent regenerator 20 that releases CO₂ from a CO₂ absorbent (hereinafter sometimes referred to as "rich solution") 19 in which CO₂ has been absorbed and regenerates the CO₂ absorbent. In the CO₂ recovery unit 12, the regenerated CO₂ absorbent (hereinafter sometimes referred to as "lean solution") 17 in which CO₂ has been removed in the absorbent regenerator 20 is reused as a CO₂ absorbent in the CO₂ absorber 18.

In FIG. 1, a reference symbol 13a is a flue gas duct, a reference symbol 13b is a stack, and a reference symbol 34 is steam-condensed water. The CO₂ recovery unit 12 may be retrofitted to recover CO₂ from an existing flue gas source or may be installed together with a new flue gas source. An openable and closable damper is installed in a line of the flue gas 14, and the damper is opened during operation of the CO₂ recovery unit 12. The damper is set to be closed when a flue gas source is in operation but the operation of the CO₂ recovery unit 12 is stopped.

In a method for recovering CO₂ using this CO₂ recovery unit 12, the flue gas 14 containing CO₂ from the industrial combustion facility 13 such as a boiler or a gas turbine is pressurized by a flue gas blower 22, sent to the flue gas cooling device 16, cooled in the flue gas cooling device 16 using the cooling water 15, and sent to the CO₂ absorber 18.

In the CO₂ absorber 18, the flue gas 14 comes into countercurrent contact with the CO₂ absorbent 17 that is an amine absorbent according to this example, and CO₂ in the flue gas 14 is absorbed into the CO₂ absorbent 17 by a chemical reaction. A CO₂-removed flue gas in which CO₂ has been removed in the CO₂ recovery portion 18A comes into gas-liquid contact with circulating cleaning water 21 containing a CO₂ absorbent that is supplied from a liquid distributor in a water-cleaning portion 18B in the CO₂ absorber 18, the CO₂ absorbent 17 entrained with the CO₂-removed flue gas is recovered, and a flue gas 23 in which CO₂ has been removed is then discharged outside the system. The rich solution 19 that is the CO₂ absorbent in which CO₂ has been absorbed is pressurized by a rich solution pump 24, heated using the lean solution that is the CO₂ absorbent 17 regenerated in the absorbent regenerator 20 in a rich-lean solution heat exchanger 25, and supplied to the absorbent regenerator 20.

The rich solution 19 released from an upper portion of the absorbent regenerator 20 to the inside thereof causes an endothermic reaction using steam that is supplied from the bottom portion, and most of CO₂ is released. The CO₂ absorbent in which a part or most of CO₂ has been released in the absorbent regenerator 20 is referred to as a semi-lean solution. This semi-lean solution becomes the CO₂ absorbent (lean solution) 17 in which almost all of CO₂ has been removed when the solution reaches the bottom portion of the absorbent regenerator 20. A part of this lean solution 17 is overheated by steam 27 in a reboiler 26, and steam for CO₂ desorption is supplied to the inside of the absorbent regenerator 20.

On the other hand, from the top portion of the absorbent regenerator 20, a CO₂ entraining gas 28 with steam released from the rich solution 19 and the semi-lean solution in the regenerator is delivered, the water vapor is condensed by a condenser 29, water is separated in a separation drum 30, and a CO₂ gas 40 is released outside the system, compressed by a separate compressor 41, and recovered. A CO₂ gas 42 that has been compressed and recovered passes through a separation drum 43, and is injected into an oilfield using enhanced oil recovery (EOR), or stored in an aquifer. Thus, a global warming countermeasure is made. Reflux water 31 separated and refluxed from the CO₂ accompanying gas 28 with water vapor in the separation drum 30 is supplied to the upper portion of the absorbent regenerator 20 by a reflux water circulation pump 35 and a cleaning water 21 side. The regenerated CO₂ absorbent (lean solution) 17 is cooled using the rich solution 19 in the rich-lean solution heat exchanger 25, then pressurized by a lean solution pump 32, cooled using a lean solution cooler 33, and then supplied to the inside of the CO₂ absorber 18. In this embodiment, the outline thereof is only described, and some of accompanying devices are omitted.

Hereinafter, preferred test examples exhibiting the effects of the present invention will be described, but the present invention is not limited to the test examples.

### [Test Examples 1-1 to 1-5]

CO₂ was absorbed using an absorption test device not illustrated.

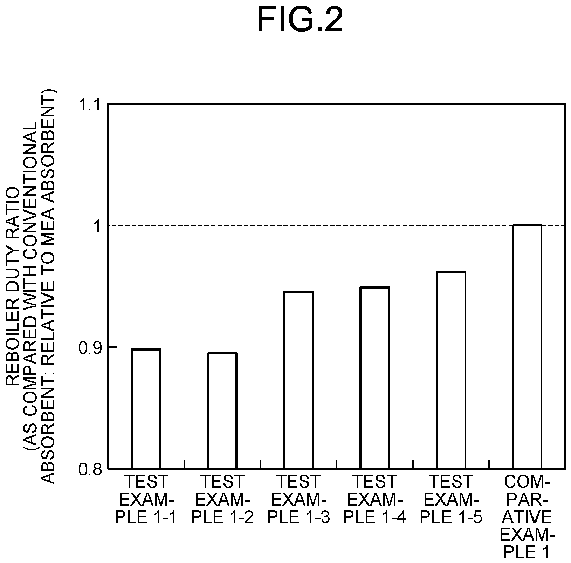

FIG. 2 is a graph illustrating reboiler duty reduction percentages of three-component-based absorbents (a secondary linear monoamine (a), a tertiary linear monoamine (b), and a secondary cyclic diamine (c) were dissolved in water) of Test Examples 1-1 to 1-5.

N-butylaminoethanol (more than 30% by weight and less than 45% by weight) as the secondary linear monoamine (a), N-methyldiethanolamine (more than 15% by weight and less than 30% by weight) as the tertiary linear monoamine (b), and 2-methylpiperazine (a concentration lower than those of (a) and (b)) as the secondary cyclic diamine (c) were dissolved and mixed in water, to prepare the absorbent of Test Example 1-1 so that the total amine component concentration of an absorption component was 55% by weight.

The absorbent of Test Example 1-2 was prepared in the same manner as in Test Example 1-1 except for using piperazine as the secondary cyclic diamine (c).

The absorbent of Test Example 1-3 was prepared in the same manner as in Test Example 1-1 except for using N-butyldiethanolamine as the tertiary linear monoamine (b).

The absorbent of Test Example 1-4 was prepared in the same manner as in Test Example 1-1 except for using N-ethylaminoethanol as the secondary linear monoamine (a) and piperazine as the secondary cyclic diamine (c).

The absorbent of Test Example 1-5 was prepared in the same manner as in Test Example 1-4 except for using N-ethyldiethanolamine as the tertiary linear monoamine (b).

In Comparative Example, monoethanolamine (MEA) was dissolved and mixed in water at 30% by weight, to prepare an absorbent of Comparative Example 1. Component compositions of Test Examples and Comparative Example are listed in Table 1 below.

**Table 1**

| [Total amine component concentration of absorption component (a)+(b)+(c): 55% by weight] | | | |
|---|---|---|---|
| | (a) Secondary linear monoamine [more than 30% by weight and less than 45% by weight] | (b) Tertiary linear monoamine [more than 15% by weight and less than 30% by weight] | (c) Secondary cyclic diamine [Concentration lower than (a) and (b)] |
| Test Example 1-1 | N-butylaminoethanol | N-methyldiehtanolamine | 2-Methylpiperazine |
| Test Example 1-2 | N-butylaminoethanol | N-methyldiethanolamine | Piperazine |
| Test Example 1-3 | N-butylaminoethanol | N-butyldiethanolamine | 2-Methylpiperazine |
| Test Example 1-4 | N-ethylaminoethanol | N-methyldiethanolamine | Piperazine |
| Test Example 1-5 | N-ethylaminoethanol | N-ethyldiethanolamine | Piperazine |
| | Primary linear monoamine [30% by weight] | | |
| Comparative Example 1 | Monoethanolamine | | |

### <Evaluation of reboiler duty ratio>

The reboiler duties when the absorbents of Test Examples and Comparative Example were used were measured. The reboiler duty in each of Test Examples was compared with the reboiler duty when the absorbent of Comparative Example was used, and was evaluated as a reboiler duty ratio. The evaluation results are illustrated in FIG. 2.

As illustrated in FIG. 2, when the reboiler duty in a case that the absorbent of Comparative Example 1 was used was considered to be 1, the reboiler duty ratios in a case that the absorbents of Test Examples 1-1 and 1-2 were used were less than 0.90, and the reboiler duty ratios in a case that the absorbents of Test Examples 1-3 to 1-5 were used were less than about 1.00.

### [Test Examples 2-1 to 2-5]

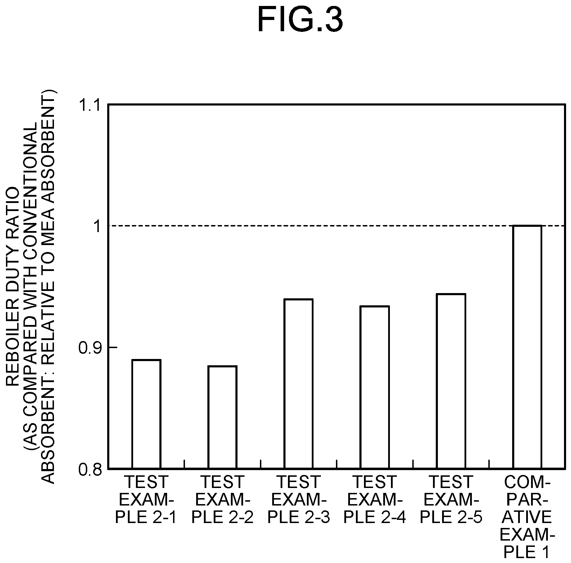

The total amine component concentration of an absorption component of the absorbent of each of Test Examples 1-1 to 1-5 was increased from 55% by weight to 65% by weight. Thus, absorbents of Test Examples 2-1 to 2-5 were prepared. Component compositions of Test Examples 2-1 to 2-5 are listed in Table 2 below. Comparative Example 1 is the same as listed in Table 1, and the mixing formulation is omitted. The evaluation results evaluated in the same manner as in Test Example 1-1 are illustrated in FIG. 3.

**Table 2**

| [Total amine component concentration of absorption component (a)+(b)+(c): 65% by weight] | | | |
|---|---|---|---|
| | (a) Secondary linear monoamine [more than 30% by weight and less than 45% by weight] | (b) Tertiary linear monoamine [more than 15% by weight and less than 30% by weight] | (c) Secondary cyclic diamine [Concentration lower than (a) and (b)] |
| Test Example 2-1 | N-butylaminoethanol | N-methyldiehtanolamine | 2-Methylpiperazine |
| Test Example 2-2 | N-butylaminoethanol | N-methyldiethanolamine | Piperazine |
| Test Example 2-3 | N-butylaminoethanol | N-butyldiethanolamine | 2-Methylpiperazine |
| Test Example 2-4 | N-ethylaminoethanol | N-methyldiethanolamine | Piperazine |
| Test Example 2-5 | N-ethylaminoethanol | N-ethyldiethanolamine | Piperazine |

As illustrated in FIG. 3, when the reboiler duty in a case that the absorbent of Comparative Example 1 was used was considered to be 1, the reboiler duty ratios in a case that the absorbents of Test Examples 2-1 and 2-2 were used were less than 0.90, and the reboiler duty ratios in a case that the absorbents of Test Examples 2-3 to 2-5 were used were less than about 1.00.

Therefore, it is found that the absorbents of Test Examples 1-1 to 1-5 and 2-1 to 2-2 that are the three-component-based absorbents (the secondary linear monoamine (a), the tertiary linear monoamine (b), and the secondary cyclic diamine (c) are dissolved in water) can reduce the reboiler duty as compared with Comparative Example 1 using monoethanolamine. In particular, it is found that the absorbents of Test Examples 1-1, 1-2, 2-1, and 2-2 can reduce the reboiler duty by 10% or more.

Accordingly, even when the concentration of an absorbent is high, an absorbent having excellent saving energy as compared with a conventional absorbent can be provided, and a reduction in reboiler duty during regeneration of an absorbent in which CO₂ or H₂S, or both of CO₂ and H₂S in a gas have been absorbed can be attained.

### [Test Example 1-6]

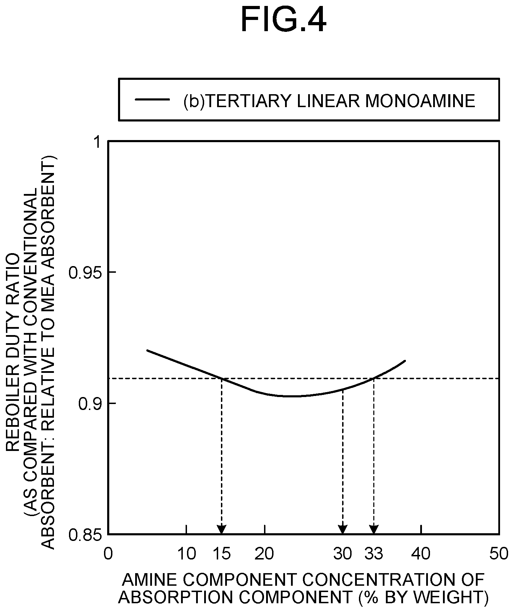

In Test Example 1-6, the absorbent of the composition of Test Example 1-1 was used, the concentration of N-butylaminoethanol as the secondary linear monoamine (a) was fixed to 32% by weight, and the component concentration of N-methyldiethanolamine as the tertiary linear monoamine (b) was changed. Thus, an absorbent of Test Example 1-6 was prepared. An absorbent of Comparative Example was the same as the absorbent prepared by dissolving and mixing the aforementioned monoethanolamine (MEA) at 30% by weight in water. A component composition of this Test Example is listed in Table 3 below. The result is illustrated in FIG. 4. FIG. 4 is a graph illustrating a relation between the amine component concentration (% by weight) of an absorption component and the reboiler duty ratio in Test Example 1-6.

**Table 3**

| [(a) Secondary linear monoamine: fixed to 32% by weight] | | | |
|---|---|---|---|
| | (a) Secondary linear monoamine [32% by weight] | (b) Tertiary linear monoamine | (c) Secondary cyclic diamine [Concentration lower than (a) and (b)] |
| Test Example 1-6 | N-butylaminoethanol | N-methyldiehtanolamine | 2-Methylpiperazine |

As illustrated FIG. 4, it is found that when the concentration of N-methyldiethanolamine as the tertiary linear monoamine (b) falls within a range of more than 15% by weight to 33% by weight, the reboiler duty can be reduced by about 9% or more.

### [Test Example 3]

As an absorbent of Test Example 3, the absorbent of the composition of Test Example 1-2 described above was used. The absorbent of Test Example 3 was subjected to a comparison test with the conventional art (Comparative Examples 2 and 3) under a concentration where the total amine component concentration (% by weight) of an absorption component was high.

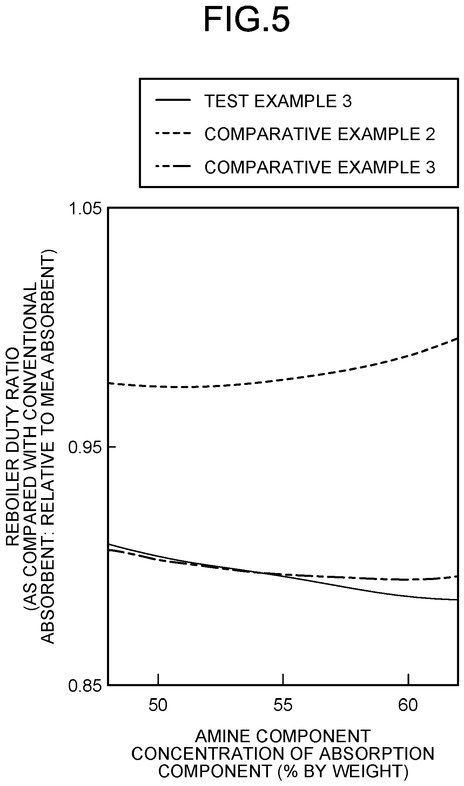

Here, in Comparative Example 2, a mixing composition of Test Example 6 of Japanese Patent Application Laid-open No. 2013-086079 was adapted, and in Comparative Example 3, a mixing composition of Test Example 1-2 of Japanese Patent Application Laid-open No. 2017-64645 was adapted. The mixing composition is listed in Table 3. FIG. 5 is a graph illustrating a relation between the amine component concentration (% by weight) of the absorption component and a reboiler duty ratio in Test Example 3. A comparison standard of a vertical axis in FIG. 5 is Comparative Example 1 in which the monoethanol amine (MEA) is dissolved and mixed in water at 30% by weight as described above. The component compositions of Test Example 3 and Comparative Examples 2 and 3 are listed in Table 4 below.

**Table 4**

| [Mixing ratio of each component of absorption component: fixed to ratio listed in Table, total amine component concentration of absorption component: changed] | | | |
|---|---|---|---|
| | (a) Secondary linear monoamine | (b) Tertiary linear monoamine | (c) Secondary cyclic diamine |
| Test Example 3 | N-butylaminoethanol [more than 30% by weight and less than 45% by weight] | N-methyldiethanolamine [more than 15% by weight and less than 30% by weight] | Piperazine [Concentration lower than (a) and (b)] |
| Comparative Example 2 | N-butylaminoethanol [45% by weight] | N-methyldiethanolamine [5% by weight] | Piperazine [5% by weight] |
| Comparative Example 3 | N-butylaminoethanol [less than 30% by weight] | N-methyldiethanolamine [less than 30% by weight] | Piperazine [Concentration lower than (a) and (b)] |

Here, the concentrations in Test Example 3 and Comparative Examples 2 and 3 were adjusted as described below.

In each example under a condition where the total amine concentration of the absorption component is 55% by weight, the concentration of the secondary linear monoamine (a) is represented by A₅₅% by weight, the concentration of the tertiary linear monoamine (b) is represented by B₅₅% by weight, and the concentration of the secondary cyclic diamine (c) is represented by C₅₅% by weight. In each example under a condition where the total amine concentration of the absorption component is changed to T% by weight, the concentration of the secondary linear monoamine (a) is represented by A_{T}% by weight, the concentration of the tertiary linear monoamine (b) is represented by B_{T}% by weight, and the concentration of the secondary cyclic diamine (c) is represented by C_{T}% by weight. In each example, the mixing ratio of the components A₅₅:B₅₅:C₅₅=A_{T}:B_{T}:C_{T} is fixed. The concentration (% by weight) of each component under a condition where the total amine concentration of the absorption component is To by weight is calculated for each composition as listed in Table 5 below.

**Table 5**

| | (a) Secondary linear monoamine | (b) Tertiary linear monoamine | (c) Secondary cyclic diamine |
|---|---|---|---|
| 55 | A₅₅ | B₅₅ | C₅₅ |
| T | A_{T} = A₅₅ × T/55 | B_{T} = B₅₅ × T/55 | C_{T} = C₅₅ × T/55 |

As illustrated in FIG. 5, under the conditions of component mixing ratios of the absorption components of Comparative Examples 2 and 3 as the conventional art, a reduction in reboiler duty under a condition where the absorption component concentration is high is slowed down or the reboiler duty is deteriorated. In contrast, it is found that the absorbent of Test Example 3 achieves a reduction in reboiler duty even under a condition where the concentration of the absorption component is high. In particular, even when the total amine concentration of the absorption component is as high as 55% by weight or more, the absorbent of Test Example 3 can achieve a further reduction in reboiler duty.

### [Test Examples 4 and 5]

As an absorbent of Test Example 4, the absorbent of the composition of Test Example 1-2 was used. The absorbent of Test Example 4 was subjected to a comparison test of changed viscosity of the absorbent with the conventional art (Comparative Examples 2 and 3) under a concentration where the total amine component concentration (% by weight) of an absorption component was high.

In Comparative Example 2, a mixing composition of Test Example 6 of Japanese Patent Application Laid-open No. 2013-086079 was adapted, and in Comparative Example 3, a mixing composition of Test Example 1-2 of Japanese Patent Application Laid-open No. 2017-64645 was adapted.

In measurement of viscosity of the absorption component, the viscosity (A) of the absorbent before introduction into the CO₂ absorber 18 of the CO₂ recovery unit 12 in FIG. 1, and the viscosity (B) of the absorbent at a liquid reservoir after absorption of CO₂ in the flue gas 14 were measured. Specifically, after a circulating absorbent was regenerated in the regenerator, and the regenerated CO₂ absorbent (lean solution) 17 was pressurized by the lean solution pump 32 and then cooled using the lean solution cooler 33, the viscosity A was measured at a position (A) where the lean solution was supplied to the inside of the CO₂ absorber 18 in the CO₂ recovery unit in FIG. 1. In contrast, as the viscosity B, the viscosity of the CO₂ absorbent (rich solution) 19 in which CO₂ had been absorbed was measured at a position (B) of a liquid reservoir portion at a bottom in the CO₂ recovery portion 18.

The mixing ratio of components of the absorption component of Test Example 4 was the fixed total amine component concentration of the absorption component of Test Example 1-2 listed in Table 1 (55% by weight). The mixing ratio of components of the absorption component of Test Example 5 was the fixed total amine component concentration of the absorption component of Test Example 2-2 (65% by weight). A viscosity standard was based on a value (viscosity A) measured at the position (A) where the absorbent was supplied to the CO₂ absorber 18 in Test Example 3, which was considered to be 1 as a standard. The results are listed in Tables 6 and 7.

**Table 6**

| | Before absorption | After absorption |
|---|---|---|
| Test Example 4 | 1 (standard) | 1.25 |
| Comparative Example 2 | 1.05 | 1.39 |
| Comparative Example 3 | 1.03 | 1.33 |

**Table 7**

| | Before absorption | After absorption |
|---|---|---|
| Test Example 5 | 1.40 | 1.65 |
| Comparative Example 2 | 1.47 | 1.80 |
| Comparative Example 3 | 1.46 | 1.76 |

The absorbents of the compositions of Test Examples 4 and 5 were compared with Comparative Examples 2 and 3 as the conventional art, as listed in Tables 6 and 7. It is found that an increase in viscosity of the absorbents is suppressed even under a condition where the concentration of the absorption component is high.

### [Test Example 6]

In Test Example 6, the absorbent of the composition of Test Example 1-1 was used, the concentration of N-butylaminoethanol as the secondary linear monoamine (a) was fixed to 32% by weight, and the component ratio by weight of N-methyldiethanolamine as the tertiary linear monoamine (b) ((tertiary linear monoamine (b)/(secondary linear monoamine (a) + secondary cyclic diamine (c)) was changed. Thus, an absorbent of Test Example 6 was prepared.

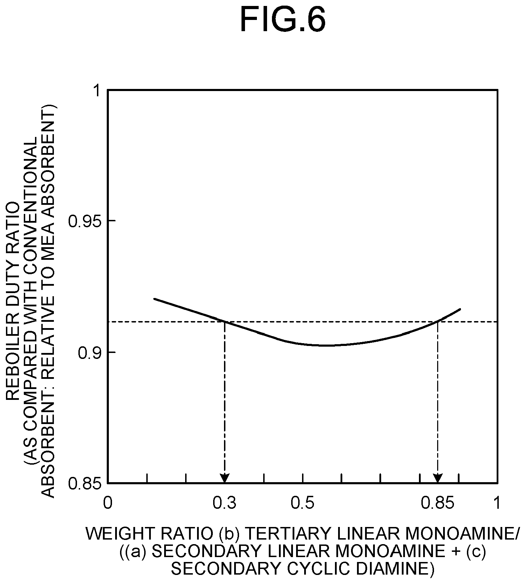

In Comparative Example, an absorbent was prepared by dissolving and mixing the aforementioned monoethanolamine (MEA) at 30% by weight in water. A component composition of this Test Example is listed in Table 8 below. The results are illustrated in FIG. 6. FIG. 6 is a graph illustrating a relation between the weight ratio "(b) tertiary linear monoamine/((a) secondary linear monoamine + (c) secondary cyclic diamine)" and a reboiler duty ratio in Test Example 6.

**Table 8**

| [(a) Secondary linear monoamine: fixed to 32% by weight] | | | |
|---|---|---|---|
| | (a) Secondary linear monoamine [32% by weight] | (b) Tertiary linear monoamine | (c) Secondary cyclic diamine [Concentration lower than (a) and (b)] |
| Test Example 6 | N-butylaminoethanol | N-methyldiethanolamine | 2-Methylpiperazine |

As illustrated FIG. 6, it is found that when the weight ratio "tertiary linear monoamine (b)/(secondary linear monoamine (a) + secondary cyclic diamine (c))" falls within a range of more than 0.3 to 0.85, the reboiler duty can be reduced by about 9% or more.

### [Test Example 7]

In Test Example 6, the absorbent of the composition of Test Example 1-1 was used, the concentration of N-butylaminoethanol as the secondary linear monoamine (a) was fixed to 32% by weight, and the component ratio by weight of N-methyldiethanolamine as the tertiary linear monoamine (b) ((tertiary linear monoamine (b)/secondary linear monoamine (a)) was changed. Thus, an absorbent of Test Example 5 was prepared.

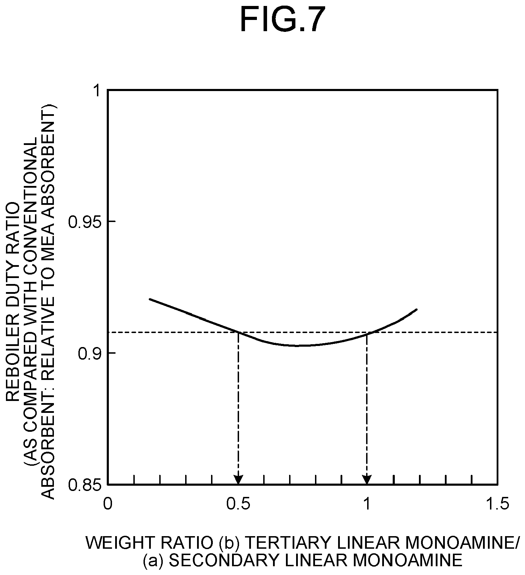

In Comparative Example, an absorbent was prepared by dissolving and mixing the aforementioned monoethanolamine (MEA) at 30% by weight in water. A component composition of this Test Example is the same as those in Table 7. The results are illustrated in FIG. 7. FIG. 7 is a graph illustrating a relation between the weight ratio "(b) tertiary linear monoamine/(a) secondary linear monoamine" and a reboiler duty ratio in Test Example 7.

As illustrated FIG. 6, it is found that when the weight ratio "tertiary linear monoamine (b)/(secondary linear monoamine (a))" falls within a range of more than 0.5 to 1.0, the reboiler duty can be reduced by about 9% or more.

A combination of the secondary linear monoamine (a), the tertiary linear monoamine (b), and the secondary cyclic diamine (c) of the present invention is not limited to a combination in which an effect is demonstrated in this Test Example. As a suitable combination other than Test Examples of the preferred combinations, an example is listed in Tables 9 to 12.

**Table 9**

| | (a) Secondary linear monoamine [more than 30% by weight and less than 45% by weight] | (b) Tertiary linear monoamine [more than 15% by weight and less than 30% by weight] | (c) Secondary cyclic diamine [Concentration lower than (a) and (b)] |
|---|---|---|---|
| 1 | N-methylaminoethanol | N-methyldiethanolamine | Piperazine |
| 2 | | N-ethyldiethanolamine | |
| 3 | | N-butyldiethanolamine | |
| 4 | | N-methyldiethanolamine | 2-Methylpiperazine |
| 5 | | N-ethyldiethanolamine | |
| 6 | | N-butyldiethanolamine | |

Table 9 is an example of preferred combinations in which N-methylaminoethanol is used as the secondary linear monoamine (a).

**Table 10**

| | (a) Secondary linear monoamine [more than 30% by weight and less than 45% by weight] | (b) Tertiary linear monoamine [more than 15% by weight and less than 30% by weight] | (c) Secondary cyclic diamine [Concentration lower than (a) and (b)] |
|---|---|---|---|
| 7 | N-ethylaminoethanol | N-methyldiethanolamine | Piperazine |
| 8 | | N-ethyldiethanolamine | |
| 9 | | N-butyldiethanolamine | |
| 10 | | 4-Dimethylamino-1-butanol | |
| 11 | | 2-Dimethylaminoethanol | |
| 12 | | 2-Diethylaminoethanol | |
| 13 | | 3-Dimethylamino-1-propanol | |
| 14 | | N-methyldiethanolamine | 2-Methylpiperazine |
| 15 | | N-ethyldiethanolamine | |
| 16 | | N-butyldiethanolamine | |
| 17 | | 4-Dimethylamino-1-butanol | |
| 18 | | 2-Dimethylaminoethanol | |
| 19 | | 2-Diethylaminoethanol | |
| 20 | | 3-Dimethylamino-1-propanol | |

Table 10 is an example of preferred combinations in which N-ethylaminoethanol is used as the secondary linear monoamine (a).

**Table 11**

| | (a) Secondary linear monoamine [more than 30% by weight and less than 45% by weight] | (b) Tertiary linear monoamine [more than 15% by weight and less than 30% by weight] | (c) Secondary cyclic diamine [Concentration lower than (a) and (b)] |
|---|---|---|---|
| 21 | N-propylaminoethanol | N-methyldiethanolamine | Piperazine |
| 22 | | N-ethyldiethanolamine | |
| 23 | | N-butyldiethanolamine | |
| 24 | | N-methyldiethanolamine | 2-Methylpiperazine |
| 25 | | N-ethyldiethanolamine | |
| 26 | | N-butyldiethanolamine | |

Table 11 is an example of preferred combinations in which N-propylaminoethanol is used as the secondary linear monoamine (a).

**Table 12**

| | (a) Secondary linear monoamine [more than 30% by weight and less than 45% by weight] | (b) Tertiary linear monoamine [more than 15% by weight and less than 30% by weight] | (c) Secondary cyclic diamine [Concentration lower than (a) and (b)] |
|---|---|---|---|
| 27 | N-butylaminoethanol | N-methyldiethanolamine | Piperazine |
| 28 | | N-ethyldiethanolamine | |
| 29 | | N-butyldiethanolamine | |
| 30 | | 4-Dimethylamino-1-butanol | |
| 31 | | 2-Dimethylaminoethanol | |
| 32 | | 2-Diethylaminoethanol | |
| 33 | | 2-Di-n-butylaminoethanol | |
| 34 | | N-ethyl-N-methylethanolamine | |
| 35 | | 3-Dimethylamino-1-propanol | |
| 36 | | 2-Dimethylamino-2-methyl-1-propanol | |
| 37 | | N-methyldiethanolamine | 2-Methylpiperazine |
| 38 | | N-ethyldiethanolamine | |
| 39 | | N-butyldiethanolamine | |
| 40 | | 4-Dimethylamino-1-butanol | |
| 41 | | 2-Dimethylaminoethanol | |
| 42 | | 2-Diethylaminoethanol | |
| 43 | | 2-Di-n-butylaminoethanol | |
| 44 | | N-ethyl-N-methylethanolamine | |
| 45 | | 3-Dimethylamino-1-propanol | |
| 46 | | 2-Dimethylamino-2-methyl-1-propanol | |
| 47 | | N-methyldiethanolamine | 2,5-Dimethylpiperazine |
| 48 | | N-ethyldiethanolamine | |
| 49 | | N-butyldiethanolamine | |

Table 12 is an example of preferred combinations in which N-butylaminoethanol is used as the secondary linear monoamine (a).

### Reference Signs List

12 CO₂ recovery unit
13 Industrial combustion facility
14 Flue gas
16 Flue gas cooling device
17 CO₂ absorbent (lean solution)
18 CO₂ absorber
19 CO₂ absorbent containing absorbed CO₂ (rich solution)
20 Absorbent regenerator
21 Cleaning water

## Claims

1. An absorbent for absorbing CO₂ or H₂S, or both of CO₂ and H₂S in a gas, the absorbent comprising, as components:
(a) a secondary linear monoamine selected from the group consisting of at least one of N-methylaminoethanol, N-ethylaminoethanol, N-propylaminoethanol, and N-butylaminoethanol ;
(b) a tertiary linear monoamine selected from the group consisting of at least one of N-methyldiethanolamine, N-ethyldiethanolamine, N-butyldiethanolamine, 4-dimethylamino-1-butanol, 2-dimethylaminoethanol, 2-diethylaminoethanol, 2-di-n-butylaminoethanol, N-ethyl-N-methylethanolamine, 3-dimethylamino-1-propanol, and 2-dimethylamino-2-methyl-1-propanol; and
(c) a secondary cyclic diamine selected from the group consisting of piperazine (C₄H₁₀N₂), 2-methylpiperazine (C₅H₁₂N₂), and 2,5-dimethylpiperazine (C₆H₁₄N₂), or a mixture thereof, wherein
a concentration of the secondary linear monoamine (a) is more than 30% by weight and less than 45% by weight, and
a concentration of the tertiary linear monoamine (b) is more than 15% by weight and less than 30% by weight, and
a concentration of the secondary cyclic diamine (c) is 1% by weight or more.

2. The absorbent according to claim 1, wherein a concentration in % by weight of the secondary cyclic diamine (c) relative to the absorbent is lower than the concentration of the secondary linear monoamine (a), and is lower than the concentration of the tertiary linear monoamine (b).

3. The absorbent according to claim 1 or 2, wherein a weight ratio of the tertiary linear monoamine (b) to a total weight of the secondary linear monoamine (a) and the secondary cyclic diamine (c) is more than 0.3 and less than 0.85.

4. The absorbent according to any one of claims 1 to 3, wherein a total concentration of the secondary linear monoamine (a), the tertiary linear monoamine (b), and the secondary cyclic diamine (c) is more than 46% by weight and 75% by weight or less.

5. A device for removing CO₂ or H₂S, or both of CO₂ and H₂S, the device comprising:
an absorbent according to any one of claims 1 to 4;
an absorber that brings a gas containing CO₂ or H₂S, or both of CO₂ and H₂S into contact with an absorbent to remove CO₂ or H₂S, or both of CO₂ and H₂S from the gas; and
an absorbent regenerator that removes CO₂ or H₂S, or both of CO₂ and H₂S from a rich solution in which the absorbent has absorbed CO₂ or H₂S, or both of CO₂ and H₂S in the absorber to obtain a lean solution,
wherein the lean solution is reused in the absorber.

6. A method for removing CO₂ or H₂S, or both of CO₂ and H₂S, the method comprising:
bringing a gas containing CO₂ or H₂S, or both of CO₂ and H₂S into contact with an absorbent to remove CO₂ or H₂S, or both of CO₂ and H₂S from the gas in an absorber;
removing CO₂ or H₂S, or both of CO₂ and H₂S from a rich solution in which the absorbent has absorbed CO₂ or H₂S, or both of CO₂ and H₂S to obtain a lean solution in an absorbent regenerator; and
reusing the lean solution to remove CO₂ or H₂S, or both of CO₂ and H₂S from the gas in the absorber, wherein
the absorbent used to remove CO₂ or H₂S, or both of CO₂ and H₂S is the absorbent according to any one of claims 1 to 4.

## Patentansprüche

1. Ein Absorptionsmittel zum Absorbieren von CO₂ oder H₂S oder sowohl CO₂ als auch H₂S in einem Gas, wobei das Absorptionsmittel als Komponenten umfasst:
(a) ein sekundäres lineares Monoamin, ausgewählt aus der Gruppe bestehend aus mindestens einem von N-Methylaminoethanol, N-Ethylaminoethanol, N-Propylaminoethanol und N-Butylaminoethanol;
(b) ein tertiäres lineares Monoamin, ausgewählt aus der Gruppe bestehend aus mindestens einem von N-Methyldiethanolamin, N-Ethyldiethanolamin, N-Butyldiethanolamin, 4-Dimethylamino-1-butanol, 2-Dimethylaminoethanol, 2-Diethylaminoethanol, 2-Di-n-butylaminoethanol, N-Ethyl-N-methylethanolamin, 3-Dimethylamino-1-propanol und 2-Dimethylamino-2-methyl-1-propanol; und
(c) ein sekundäres cyclisches Diamin, ausgewählt aus der Gruppe bestehend aus Piperazin (C₄H₁₀N₂), 2-Methylpiperazin (C₅H₁₂N₂) und 2,5-Dimethylpiperazin (C₆H₁₄N₂) oder einer Mischung davon, wobei
eine Konzentration des sekundären linearen Monoamins (a) mehr als 30 Gew.-% und weniger als 45 Gew.-% beträgt und
eine Konzentration des tertiären linearen Monoamins (b) mehr als 15 Gew.-% und weniger als 30 Gew.-% beträgt und
eine Konzentration des sekundären cyclischen Diamins (c) 1 Gew.-% oder mehr beträgt.

2. Das Absorptionsmittel nach Anspruch 1, wobei eine Konzentration in Gew.-% des sekundären cyclischen Diamins (c), bezogen auf das Absorptionsmittel, niedriger ist als die Konzentration des sekundären linearen Monoamins (a) und niedriger ist als die Konzentration des tertiären linearen Monoamins (b).

3. Das Absorptionsmittel nach Anspruch 1 oder 2, wobei ein Gewichtsverhältnis des tertiären linearen Monoamins (b) zu einem Gesamtgewicht des sekundären linearen Monoamins (a) und des sekundären cyclischen Diamins (c) mehr als 0,3 und weniger als 0,85 beträgt.

4. Das Absorptionsmittel nach einem der Ansprüche 1 bis 3, wobei eine Gesamtkonzentration des sekundären linearen Monoamins (a), des tertiären linearen Monoamins (b) und des sekundären cyclischen Diamins (c) mehr als 46 Gew.-% und 75 Gew.-% oder weniger beträgt.

5. Eine Vorrichtung zum Entfernen von CO₂ oder H₂S oder sowohl CO₂ als auch H₂S, wobei die Vorrichtung umfasst:
ein Absorptionsmittel nach einem der Ansprüche 1 bis 4;
einen Absorber, der ein Gas, das CO₂ oder H₂S oder sowohl CO₂ als auch H₂S enthält, mit einem Absorptionsmittel in Kontakt bringt, um CO₂ oder H₂S oder sowohl CO₂ als auch H₂S aus dem Gas zu entfernen; und
einen Absorptionsmittel-Regenerator, der CO₂ oder H₂S oder sowohl CO₂ als auch H₂S aus einer reichen Lösung entfernt, in der das Absorptionsmittel CO₂ oder H₂S oder sowohl CO₂ als auch H₂S in dem Absorber absorbiert hat, um eine magere Lösung zu erhalten,
wobei die magere Lösung in dem Absorber wiederverwendet wird.

6. Ein Verfahren zum Entfernen von CO₂ oder H₂S oder sowohl CO₂ als auch H₂S, wobei das Verfahren umfasst:
Inkontaktbringen eines Gases, das CO₂ oder H₂S oder sowohl CO₂ als auch H₂S enthält, mit einem Absorptionsmittel, um CO₂ oder H₂S oder sowohl CO₂ als auch H₂S aus dem Gas in einem Absorber zu entfernen;
Entfernen von CO₂ oder H₂S oder sowohl CO₂ als auch H₂S aus einer reichen Lösung, in der das Absorptionsmittel CO₂ oder H₂S oder sowohl CO₂ als auch H₂S absorbiert hat, um eine magere Lösung in einem Absorptionsmittel-Regenerator zu erhalten; und
Wiederverwendung der mageren Lösung, um CO₂ oder H₂S oder sowohl CO₂ als auch H₂S aus dem Gas in dem Absorber zu entfernen, wobei
das zum Entfernen von CO₂ oder H₂S oder sowohl CO₂ als auch H₂S verwendete Absorptionsmittel das Absorptionsmittel nach einem der Ansprüche 1 bis 4 ist.

## Revendications

1. Absorbant pour absorber le CO₂ ou le H₂S, ou à la fois le CO₂ et le H₂S, dans un gaz, l'absorbant comprenant, en tant que composants :
(a) une monoamine linéaire secondaire sélectionnée dans le groupe consistant en au moins un parmi le N-méthylaminoéthanol, le N-éthylaminoéthanol, le N-propylaminoéthanol, et le N-butylaminoéthanol ;
(b) une monoamine linéaire tertiaire sélectionnée dans le groupe consistant en au moins un parmi la N-méthyldiéthanolamine, la N-éthyldiéthanolamine, la N-butyldiéthanolamine, le 4-diméthylamino-1-butanol, le 2-diméthylaminoéthanol, le 2-diéthylaminoéthanol, le 2-di-n-butylaminoéthanol, la N-éthyl-N-méthyléthanol-amine, le 3-diméthylamino-1-propanol, et le 2-diméthyl-amino-2-méthyl-1-propanol ; et
(c) une diamine cyclique secondaire sélectionnée dans le groupe consistant en la pipérazine (C₄H₁₀N₂), la 2-méthylpipérazine (C₅H₁₂N₂) et la 2,5-diméthyl-pipérazine (C₆H₁₄N₂), ou un mélange de celles-ci, dans lequel
une concentration de la monoamine linéaire secondaire (a) est supérieure à 30 % en poids et inférieure à 45 % en poids, et
une concentration de la monoamine linéaire tertiaire (b) est supérieure à 15 % en poids et inférieure à 30 % en poids, et
une concentration de la diamine cyclique secondaire (c) est de 1 % en poids ou plus.

2. Absorbant selon la revendication 1, dans lequel une concentration en % en poids de la diamine cyclique secondaire (c) par rapport à l'absorbant est inférieure à la concentration de la monoamine linéaire secondaire (a), et est inférieure à la concentration de la monoamine linéaire tertiaire (b).

3. Absorbant selon la revendication 1 ou 2, dans lequel un rapport pondéral monoamine linéaire tertiaire (b) sur poids total de la monoamine linéaire secondaire (a) et de la diamine cyclique secondaire (c) est supérieur à 0,3 et inférieur à 0,85.

4. Absorbant selon l'une quelconque des revendications 1 à 3, dans lequel une concentration totale de la monoamine linéaire secondaire (a), de la monoamine linéaire tertiaire (b) et de la diamine cyclique secondaire (c) est supérieure à 46 % en poids et de 75 % en poids ou moins.

5. Dispositif pour éliminer le CO₂ ou le H₂S, ou à la fois le CO₂ et le H₂S, le dispositif comprenant :
un absorbant selon l'une quelconque des revendications 1 à 4 ;
un absorbeur qui met un gaz contenant du CO₂ ou du H₂S, ou à la fois du CO₂ et du H₂S, en contact avec un absorbant pour éliminer le CO₂ ou le H₂S, ou à la fois le CO₂ et le H₂S, du gaz ; et
un régénérateur d'absorbant qui élimine le CO₂ ou le H₂S, ou à la fois le CO₂ et le H₂S, d'une solution riche dans laquelle l'absorbant a absorbé du CO₂ ou du H₂S, ou à la fois du CO₂ et du H₂S, dans l'absorbeur pour obtenir une solution pauvre,
dans lequel la solution pauvre est réutilisée dans l'absorbeur.

6. Procédé pour éliminer le CO₂ ou le H₂S, ou à la fois le CO₂ et le H₂S, le procédé comprenant :
la mise en contact d'un gaz contenant du CO₂ ou du H₂S, ou à la fois du CO₂ et du H₂S, avec un absorbant pour éliminer le CO₂ ou le H₂S, ou à la fois le CO₂ et le H₂S, du gaz dans un absorbeur ;
l'élimination du CO₂ ou du H₂S, ou à la fois du CO₂ et du H₂S, d'une solution riche dans laquelle l'absorbant a absorbé du CO₂ ou du H₂S, ou à la fois du CO₂ et du H₂S, pour obtenir une solution pauvre dans un régénérateur d'absorbant ; et
la réutilisation de la solution pauvre pour éliminer le CO₂ ou le H₂S, ou à la fois le CO₂ et le H₂S, du gaz dans l'absorbeur, dans lequel
l'absorbant utilisé pour éliminer le CO₂ ou le H₂S, ou à la fois le CO₂ et le H₂S, est l'absorbant selon l'une quelconque des revendications 1 à 4.
